# EUROPEAN PATENT APPLICATION

(11) **EP 4 382 917 A1**
(43) Date of publication of application: **12.06.2024**
(21) Application number: 22852770.1
(22) Date of filing: 05.07.2022
(51) Int. Cl.: G01N 35/00

(54) **CHEMICAL ANALYSIS DEVICE**

(30) Priority: 03.08.2021 JP 2021127584
(71) Applicant: HITACHI HIGH-TECH CORPORATION, Tokyo 105-6409 (JP)
(72) Inventor: KOURAI Yuusuke, Tokyo 100-8280 (JP); SUZUKI Mutsumi, Tokyo 100-8280 (JP); SASAKI Kota, Tokyo 100-8280 (JP); YOSHIDA Gorou, Tokyo 105-6409 (JP); TANAKA Yuto, Tokyo 105-6409 (JP); TSUNASHIMA Kenta, Tokyo 105-6409 (JP)
(74) Representative: Mewburn Ellis LLP
(86) International application number: PCT/JP2022/026667
(87) International publication number: WO 2023/013344

(57) **Abstract**

Provided is a chemical analysis device that facilitates the estimation of a failure position in failure diagnosis. This chemical analysis device comprises a plurality of reaction cells into which specimens and reagents are dispensed and measures the absorbances of mixed liquids of the specimens and reagents accommodated in the reaction cells using a light measurement system for emitting light onto the mixed liquids and measuring the light that has passed through the mixed liquids. The chemical analysis device comprises a diagnosis unit for failure diagnosis. The diagnosis unit accumulates time-series light-measurement-system data measured using a sample specimen for failure diagnosis and a reagent for failure diagnosis, creates a light measurement data population for failure diagnosis for each prescribed reaction cell, and carries out failure diagnosis by comparing the light measurement data of the light measurement data populations created for each prescribed reaction cell with a preset threshold.

## Description

### Technical Field

The present invention relates to a chemical analysis device, and in particular to a chemical analysis device with a failure diagnosis function.

### Background Art

The chemical analysis device includes an automatic sample and reagent supply mechanism that supplies samples and reagents to a reaction container, an automatic stirring mechanism that stirs the samples and reagents in the reaction container, a colorimetric measurement unit that measures physical properties of the samples during or after reaction, an automatic cleaning mechanism that suctions and drains the samples after the measurement is completed and cleans the reaction container, and a control unit that controls operations of the units. The throughput of chemical analysis device can range from a few hundred tests per hour to 9,000 tests or more per hour in larger devices.

In the colorimetric measurement unit, white light from a light source is emitted onto a solution to be measured in the reaction container, and the transmitted light is separated into spectra by a spectrometer. Absorbance is calculated by measuring the light intensity at a specific wavelength among the spectra and comparing the measured light intensity to the light intensity of a solution of a pre-measured reference concentration. The chemical components in the solution to be measured are analyzed based on the absorbance.

In chemical analysis devices, halogen lamps are used as light sources. Halogen lamps are continuous spectrum light sources covering from visible to near-infrared regions. The halogen cycle provides excellent filament lifespan.

A rated lifespan is set for light source lamps. The rated lifespan is defined as an average lifespan of a plurality of lamps. Therefore, not all lamps reach the end of the lifespan when reaching the rated lifespan. For example, lamps may fail to light up before reaching the rated lifespan.

Therefore, a recommended replacement period is set for the lamps. The recommended replacement period is set shorter than the rated lifespan. In other words, the recommended replacement period is set with a margin against the rated lifespan. If the margin is excessive, lamps will be replaced more frequently, resulting in higher running costs.

Therefore, to reduce running costs, the recommended replacement period may require to be set with a small margin against the rated lifespan. However, here, it is known that even if a light amount that satisfies specifications is ensured at the end of the lifespan, the light amount may fluctuate in a short period of time. Fluctuations in light amount lead to fluctuations in measurement accuracy. Therefore, there is a limit to setting the recommended lamp replacement period with a small margin.

To provide a chemical analysis device that can prolong the lifespan of a light source lamp and ensure measurement accuracy, PTL 1 proposes a method of setting the light source drive power to a value lower than the rated value and the blank absorbance within a predetermined tolerance to extend the lifespan of the lamp. PTL 1 proposes to monitor the light source drive power supplied to the light source to diagnose the lifespan of the light source lamp and the failure of the light source lamp, and to monitor the absorbance to diagnose the failure of the light source lamp.

To enable early detection of abnormalities in the measurement unit equipped with a photodetector, PTL 2 proposes an automatic analysis device including a specimen container holding unit that holds a specimen container that contains a specimen to be measured, a reagent container holding unit that holds a reagent container that contains a reagent, a reaction container holding unit that holds a reaction container in which the specimen and reagent are stirred, a specimen dispensing unit that suctions the specimen from the specimen container and dispenses the specimen into the reaction container, a reagent dispensing unit that suctions the reagent from the reagent container and dispenses the reagent into the reaction container, a measurement unit that measures a reaction product obtained by reacting the specimen and the reagent, which have been dispensed into the reaction container, a control unit that causes the measurement unit to perform self-diagnosis at the startup of the automatic analysis device, at the start of measurement of a predetermined unit of specimen, and at the end of measurement of a predetermined unit of specimen, and determines the normality or abnormality of the measurement unit based on the measurement values of the measurement unit, and a display unit that displays the measurement values obtained through self-diagnosis by the measurement unit in time series under control of the control unit.

### Citation List

### Patent Literature

| | |
|---|---|
| PTL 1: | JP2008-058151A |
| PTL 2: | JP2019-158738A |

### Summary of Invention

### Technical Problem

According to PTL 1, the lifespan of the light source lamp can be prolonged and measurement accuracy can be ensured.

However, PTL 1 does not describe a method for diagnosing failures other than those of the light source lamp. In addition to the light source lamp, the dispensing mechanism, the stirring mechanism, the cleaning mechanism, the reaction cell, and other devices may each have thresholds determined to satisfy analytical performance, but failure diagnosis for each mechanism is independent, making it difficult to pinpoint the failure location, and restoration may take time.

According to PTL 2, even if the measurement unit is determined to be normal at startup, if the measurement unit is determined to be abnormal at the start of measurement of a predetermined unit of specimen or at the end of measurement of a predetermined unit of specimen, it is possible to promptly identify the abnormality and take the prescribed measures, thereby eliminating abnormalities in measurement values accompanying continued use of the measurement unit that has been determined to be abnormal. However, PTL 2 does not describe a method to diagnose any abnormality other than that of the measurement unit provided with a photodetector.

An object of the present invention is to provide a chemical analysis device that facilitates the estimation of a failure location in failure diagnosis.

### Solution to Problem

To accomplish the above object, the chemical analysis device of the present invention is configured as described in the claims. In the claims, the citation of other claims in the dependent claims is a single claim citation to make the description of the dependent claims easy to understand, but the present invention includes the form in which multiple claims are cited (multiple dependent claim) and the form in which a plurality of multiple dependent claims are cited.

Specifically, the chemical analysis device of the present invention is, for example, a chemical analysis device including a plurality of reaction cells into which specimens and reagents are dispensed, and performing absorbance measurement by a photometric system that emits light onto a mixed liquid of the specimens and the reagents contained in the reaction cells and measures the light passing through the mixed liquid, the chemical analysis device including a diagnosis unit that performs failure diagnosis, in which the diagnosis unit accumulates time series of photometric data measured using a sample specimen for failure diagnosis and a reagent for failure diagnosis, creates a population of photometric data for failure diagnosis for each predetermined reaction cell, and diagnoses failure by comparing the photometric data of the population of photometric data created for each predetermined reaction cell with a preset threshold.

The diagnosis unit acquires time-series data of various mechanisms that configure the chemical analysis device, such as a dispensing mechanism and a stirring mechanism, and when a failure is determined by comparing the photometric data of a population of photometric data created for each predetermined reaction cell with a preset threshold, the failure location is estimated by matching the photometric data with the time-series data of various mechanisms.

### Advantageous Effects of Invention

The present invention facilitates the estimation of failure location in failure diagnosis.

Problems, configurations, and effects other than those described above will be clarified by the following description of the embodiments.

### Brief Description of Drawings

[FIG. 1] FIG. 1 is an explanatory diagram illustrating an example of an overall device configuration of a chemical analysis device to which the present invention is applied.
[FIG. 2] FIG. 2 is a diagram illustrating measurement results of a photometric system described in a first embodiment.
[FIG. 3] FIG. 3 is an explanatory diagram of a thermostat bath of a device configuration described in the first embodiment, viewed from the top.
[FIG. 4] FIG. 4 is a diagram illustrating the measurement results of the photometric system described in the first embodiment.
[FIG. 5] FIG. 5 is a flowchart cross-sectional diagram illustrating a flow of failure diagnosis described in the first embodiment.
[FIG. 6] FIG. 6 is a flowchart cross-sectional diagram illustrating a flow of failure diagnosis described in a second embodiment.
[FIG. 7] FIG. 7 is a diagram illustrating measurement results described in the second embodiment.

### Description of Embodiments

Hereinafter, an embodiment of the present invention will be described with reference to the drawings. Substantially identical or similar configurations are indicated by the same reference numerals, and when the description is redundant, the description may be omitted.

### First Embodiment

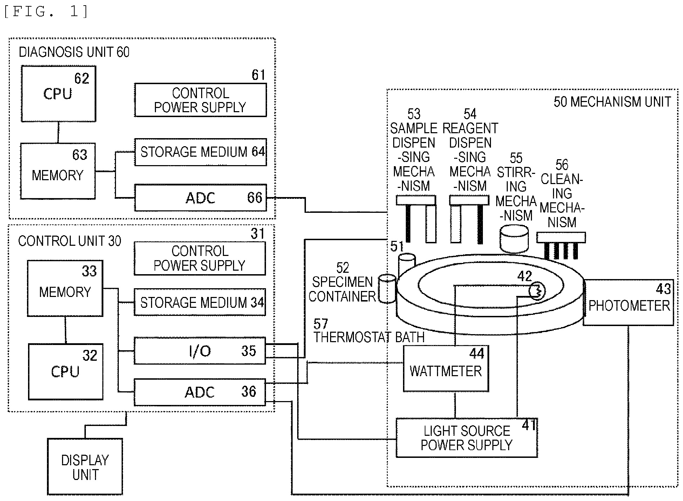

An example of an overall device configuration of a chemical analysis device to which the present invention is applied is described with reference to FIG. 1.

The chemical analysis device includes a control unit 30, a mechanism unit 50, and a diagnosis unit 60. The control unit 30 includes a control power supply 31, a CPU 32, a memory 33, a storage medium 34, an I/O 35, and an AD converter 36. The mechanism unit 50 includes a light source power supply 41, a light source 42, a multi-wavelength photometer 43, a power meter 44, a sample dispensing mechanism 53, a reagent dispensing mechanism 54, a stirring mechanism 55, a cleaning mechanism 56, and a thermostat bath 57. The diagnosis unit 60 includes a control power supply 61, a CPU 62, a memory 63, a storage medium 64, and an AD converter 66.

The control unit 30 drives the various parts of the mechanism unit 50 via the I/O 35. The sample dispensing mechanism 53 dispenses a sample in a specimen container (sample container) 51 into a reaction cell (reaction container) 52. The reagent dispensing mechanism 54 injects a reagent into the reaction container 52. The stirring mechanism 55 stirs a mixed liquid in the reaction cell (reaction container) 52 to react the sample and the reagent. The cleaning mechanism 56 cleans the reaction cell (reaction container) 52. The thermostat bath 57 maintains a reaction system at a constant temperature to stabilize reaction.

The light from the light source 42 is irradiated onto the mixed liquid contained in the reaction cell (reaction container) 52. The multi-wavelength photometer 43 detects light of a predetermined wavelength among lights that passed through the mixed liquid. The AD converter 36 converts analog signals from the multi-wavelength photometer 43 into digital signals. The control unit 30 calculates absorbance by comparing a light intensity detected by the multi-wavelength photometer 43 with a light intensity of a solution of a pre-measured reference concentration. The control unit 30 analyzes the sample based on absorbance.

The light source 42 and the multi-wavelength photometer 43 configure a photometric system.

The power meter 44 measures a light source drive power, that is, light source drive current or light source drive voltage. Methods for measuring the light source drive current include a method using a Hall element with the light source power supply 41 as a DC power source and a method using a current transformer with the light source power supply 41 as an AC power source. The method using a Hall element has the advantage of preventing power loss because the current is measured in a non-contact manner. Method for measuring light source drive voltage includes a method using a shunt resistor to measure the potential difference generated at both ends of the resistor.

The light source power supply 41 supplies power to the light source 42. The light source power supply 41 controls the power supplied to the light source 42 based on a control signal from the control unit 30. The storage medium 34 stores various programs for operating the chemical analysis device. The memory 33 stores absorbance and light source drive power in real time. The control power supply 31 is the power supply for the control unit 30. The CPU 32 reads the program stored in storage medium 34 and controls the operation of control unit 30.

In a failure location estimation of the chemical analysis device in the present embodiment, the measured value of dynamic characteristics of each mechanism of the mechanism unit 50 are transmitted to the ADC 66 of the diagnosis unit 60. The storage medium 64 stores thresholds and various programs for estimating the failure location of the chemical analysis device. The memory 63 stores the dynamic characteristics of each mechanism of the mechanism unit 50 and the measurement results of the photometric system in real time. The control power supply 61 is the power supply for the diagnosis unit 60. The CPU 62 reads the thresholds and the programs stored in the storage medium 64 and controls the operation of the control unit 30.

In the present embodiment, the chemical analysis device performs (1) an absorbance calculation process for calculating absorbance by comparing the light intensity detected by the multi-wavelength photometer 43 with the light intensity of the solution of the pre-measured reference concentration, (2) a lamp lifespan extension mode operation process for operating the chemical analysis device in a lamp lifespan extension mode, (3) a lifespan determination process for determining that the light source lamp has reached the end of the lifespan and generating a warning indicating the end of the lifespan, (4) a failure determination process for determining that the light source lamp or various mechanisms have failed and generating a warning indicating the failure, and (5) a failure location estimation process when various mechanisms fail. The programs that perform the processes (1) to (4) are stored in the storage medium 34. The program that performs the process (5) is stored in the storage medium 64. The process (5) is described in detail below.

The failure location estimation process and the like when the various mechanisms configuring the chemical analysis device fail in the present embodiment will be described in detail.

To diagnose whether there is a failure, generally, the measured values of the photometric system are accumulated repeatedly without changing the conditions to create a population, and the degree of variation is diagnosed by determining a threshold. In repetitive measurements, generally, measurements are made in series over time in a single photometric system, and the results of threshold determinations are used to diagnose a failure or abnormality when there was a change. Then, after checking the failure by going back to the timing when the failure occurred, the failure location is empirically investigated to estimate the location of the failure, thereby the presence of the failure is confirmed. Although the lifespan of each mechanism may be set to predict the failure of each mechanism, it is necessary to refer to the output results for each mechanism, which is time consuming.

In the present embodiment, in addition to the population of photometric data measured in series over time described above, photometric data is recorded by dispensing sample specimens and reagents for failure diagnosis into a plurality of reaction cells, which are then used to create a population of photometric data for each reaction cell location to diagnose failure. For example, a glycerin aqueous solution is used as a sample specimen for failure diagnosis. By changing the concentration of the glycerin aqueous solution, the viscosity of the analysis target of the chemical analysis device is simulated. In addition to the glycerin aqueous solution, a saline solution may be used. For example, dye solutions such as amide black are used as reagents for failure diagnosis. A specimen container is provided to accommodate sample specimens for failure diagnosis as the specimen container (sample container) (not illustrated).

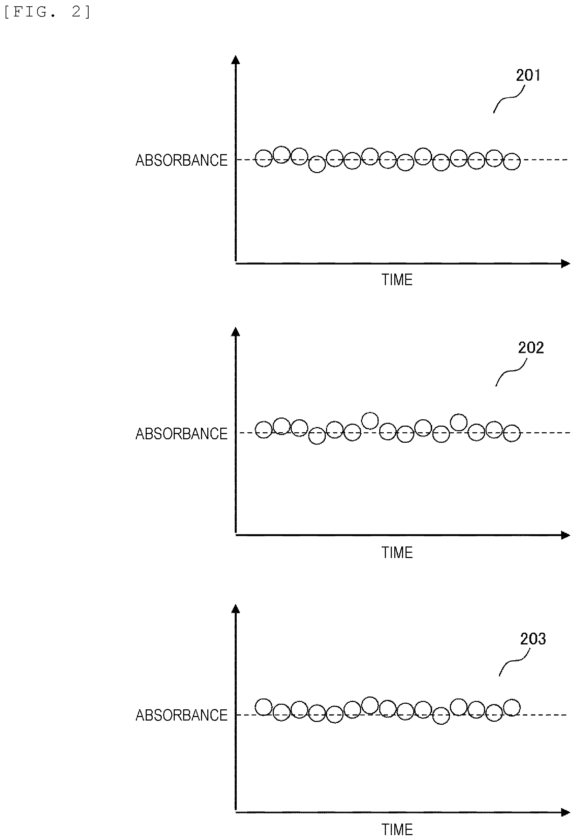

FIG. 2 illustrates the measurement results of the photometric system in the present embodiment. When photometric data measured in series over time is plotted with time on the horizontal axis and absorbance on the vertical axis, data 201 to data 203 are plotted. Failure is diagnosed by comparing the average value shown in the dashed line with a preset threshold using indicators such as the amount of difference between the measured value of the absorbance and the average value, and a coefficient of variation obtained by dividing a standard deviation of the measured value of the absorbance by the average value. Data 201 to data 203 indicate the measurement results of different reaction cells, and the data are recorded so that it is possible to know which position of the reaction cell the measurement results are from. In other words, the population for failure diagnosis is created based on measurement time information and reaction cell location information.

A unit of the time axis on the horizontal axis is several seconds, for example.

Photometric data measured in a series over time for generating a population may be measured by emptying the reaction cell and measuring the data, or by dispensing and filling the reaction cell with sample specimens and reagents for failure diagnosis as described above. In the former case, costs can be reduced by not using the sample specimens and reagents for failure diagnosis. In the latter case, the time required to measure data for failure diagnosis can be shortened because the population created by measuring in series over time and the population organized for each reaction cell can be created using common photometric data. If photometry can be performed without substantially changing conditions, it is conceivable to diagnose failures using photometric data from the analysis target of the chemical analysis device rather than from the sample specimens and reagents for failure diagnosis. The important thing is to create a population of photometric data for each reaction cell for failure diagnosis.

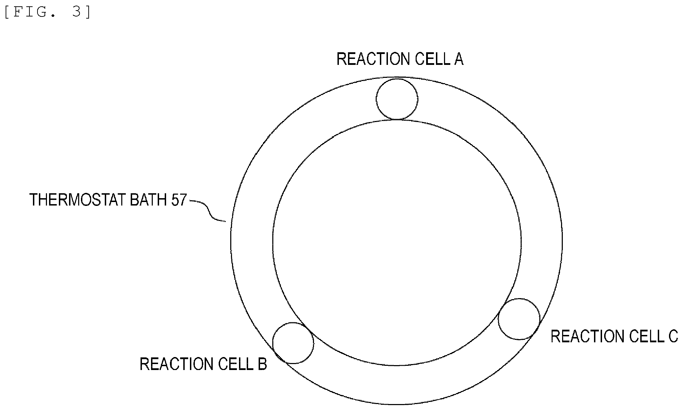

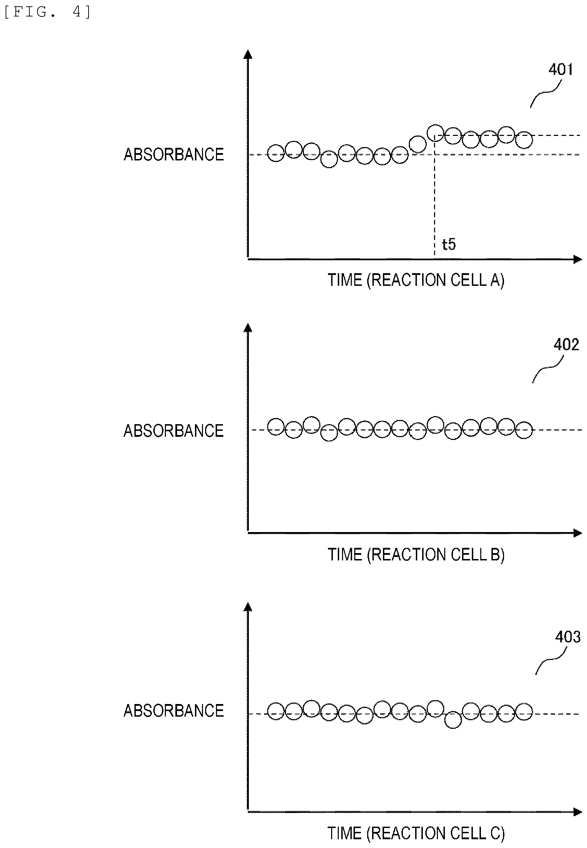

As shown in FIG. 3, for example, three reaction cells (A, B, and C) are selected for use in failure diagnosis, and the sample specimens and reagents for failure diagnosis are dispensed into the selected reaction cells to record photometric data. As a result, as shown in FIG. 4, the results shown in data 401, data 402, and data 403 are plots of the data measured at the locations of the reaction cell A, the reaction cell B, and the reaction cell C, respectively, and collected at a predetermined time axis. The average value is, for example, a moving average of the three most recent measurement data. If the failure depends on the location of the reaction cell, as shown in data 401, it is easier to notice changes in the average value of the measured values, increasing the accuracy of diagnosis of failure or abnormality. In the present embodiment, the diameter of the circle in the plot corresponds to the threshold. Just before time t5, the difference from the previous average value exceeds the threshold.

The number of selected reaction cells is not limited to three. The more selected locations, the more accurate the failure location estimation. In other words, the position and number of reaction cells used for failure diagnosis are set according to the total number of reaction cells. Here, preferably, the selected locations are evenly distributed in the circumferential direction of the thermostat bath 57.

Since the population has spatial information (location information of the reaction cell), it is possible to estimate the failure location. For example, in the measurement results shown in FIG. 4, it can be presumed that the failure occurred at a location related to the reaction cell A. When the same failure-determining result occurs simultaneously in the reaction cell B and the reaction cell C, it can be inferred that a failure has occurred in the mechanism common to reaction cells A to C. Thus, since the failure location can be estimated by integrating spatial independence and temporal continuity, the time required for failure cause analysis and recovery response can be shortened.

As the threshold used for failure diagnosis, a new threshold may be determined based on accumulated data of the photometric data. In other words, to avoid determining (estimating) a failure when there is no failure, if there are a plurality of cases in which failure determination (estimation) is performed using the previous threshold and it is found that there is actually no failure when photometric data is accumulated, the threshold is loosely set. In FIG. 4, the diameter of the circle in the plot is set to a larger diameter.

The determination of the failure diagnosis is made by the diagnosis unit 60 in FIG. 1. Photometric data and operating data of various mechanisms are transmitted from the mechanism unit 50 to the AD converter 66 of the diagnosis unit 60 and temporarily stored in the memory 63. The storage medium 64 stores a program for organizing photometric data as a population in a time series (into a series over time) and for each reaction cell, thresholds for failure determination for each population, and the like, and the CPU 62 processes the data to determine failure.

Next, the flow for performing the failure location estimation process and the like when the various mechanisms described in the first embodiment fail is described.

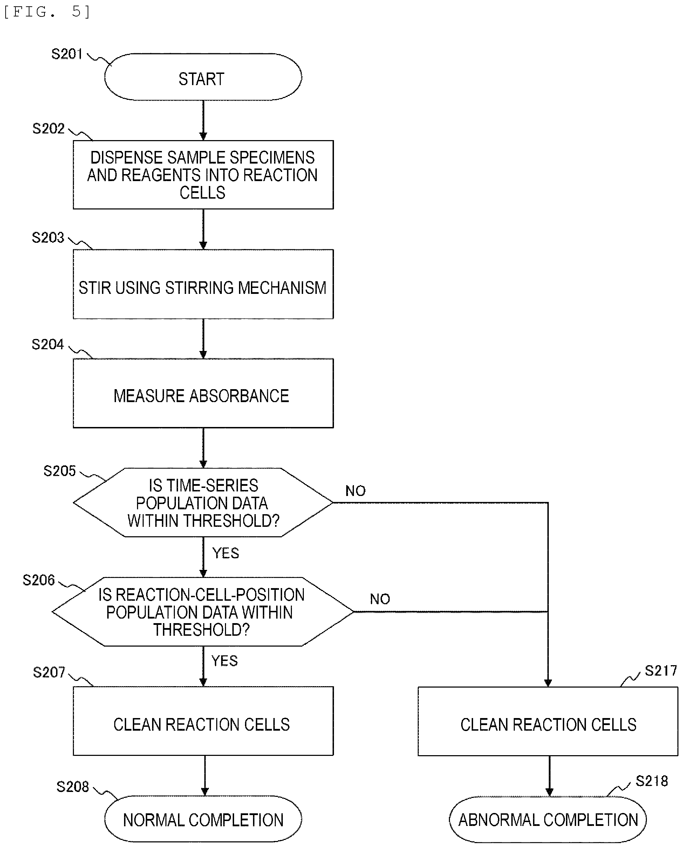

FIG. 5 is a flowchart for performing the failure location estimation process and the like when the various mechanisms described in the first embodiment fail.

In S201, failure diagnosis is started.

In S202, sample specimens and reagents for failure diagnosis are dispensed into reaction cells.

In S203, the sample reagent and reagent are stirred by the stirring mechanism.

In S204, absorbance is measured with the photometric system.

In S205, failure is determined for data that forms a population in a series over time.

When the data is determined to be out of the threshold in S205, it is determined that a failure has occurred in any of the chemical analysis device.

In S206, if the data for forming the population in time series in S205 are within the threshold, a threshold determination is performed with the data for forming the population at each reaction cell location.

In S207, if it is determined that the data is within the threshold in S206, the reaction cell is cleaned and the flow proceeds to normal completion.

When the data is determined to be out of the threshold in S206, the failure location is estimated, the reaction cell is cleaned, and the flow proceeds to normal completion. When the data is determined to be out of the threshold in S205, the reaction cell is cleaned and the flow proceeds to normal completion.

As a result, it is possible to estimate the location that needs to be restored when diagnosing a failure, thereby shortening the time required to recover from a failure. The probability of detecting early abnormalities can be increased, the possibility of misdiagnosis can be reduced, and analytical performance can be improved.

When the data is determined to be out of the threshold in S205, it can be determined that a failure has occurred in any of the chemical analysis device, but since it is difficult to estimate the location of the failure, the flow may proceed to S206 so that the failure location can be estimated. In general, it is more likely that changes will appear in the measurement data in each reaction cell than in the data that form the population in the series over time (measurement data for the entire chemical analysis device). Considering the possibilities, S205 may be omitted.

### Second Embodiment

Next, the flow for performing the failure location estimation process and the like when the various mechanisms described in a second embodiment fail is described.

The device configuration is the same as in the first embodiment. The programs for failure diagnosis and the like stored in the storage medium of the diagnosis unit 60 are different.

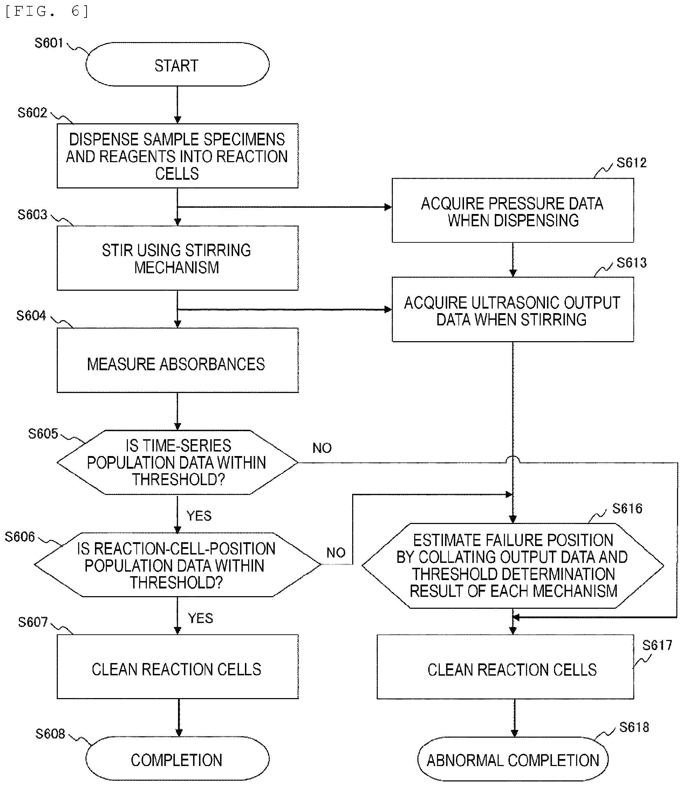

FIG. 6 is a flow for performing the failure location estimation process and the like when the various mechanisms described in the second embodiment fail.

S601 to S607, S617 and S618 are the same as S201 to S207, S217 and S218 in the first embodiment.

At S602, control signals when dispensing are transmitted to the diagnosis unit 60 to acquire data. The data to be acquired include, for example, a pressure value in a dispensing path and a current value when controlling syringe pump pressure.

In S603, for example, when stirring using ultrasound, an output of the ultrasound during stirring is transmitted to the diagnosis unit 60 to acquire data in time series. The acquired data include a sound pressure value of the output ultrasound and a current value when driving an ultrasonic element.

In S616, the failure locations indicating a threshold abnormality are estimated by matching the results of failure determination against the data obtained from the various mechanisms that configure the chemical analysis device (the sample dispensing mechanism, the reagent dispensing mechanism, and the stirring mechanism in FIG. 6) and the data formed by the population at the reaction cell location.

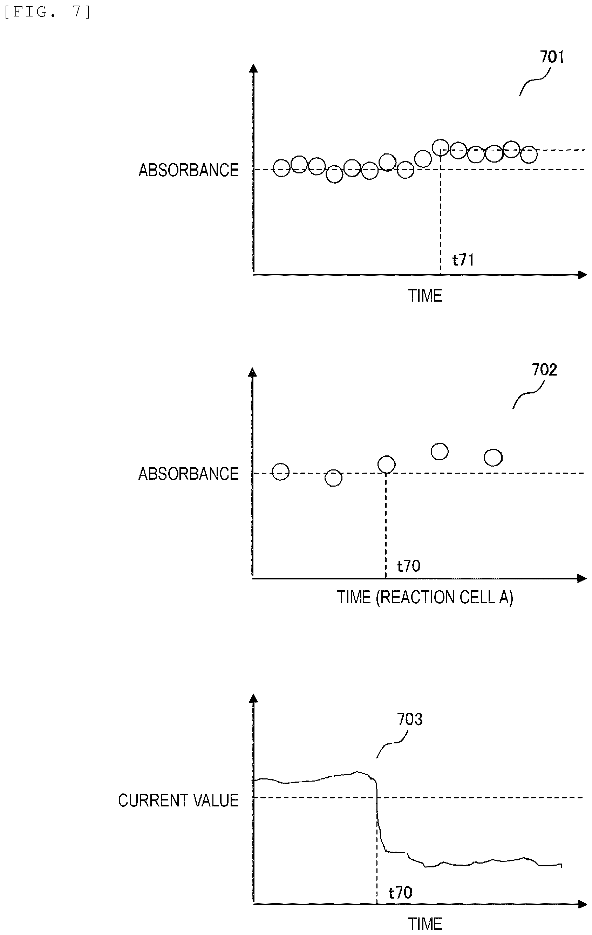

FIG. 7 shows data 701 for forming the population in time series, data 702 for forming the population in the reaction cell (the reaction cell A in FIG. 7), and data 703 obtained for a current value when stirring the reaction cell A. When there is a single stirring mechanism, the current value during stirring by the stirring mechanism may be used regardless of the reaction cell. Although there will be a time discrepancy due to the difference between the absorbance measurement position and the stirring position, the time difference from the stirring mechanism to the absorbance measurement position is considered to correspond the data 702 and the data 703.

The data 701 for forming a population in time series shows data in which the average value changes at time t71. However, when the data 702 of the reaction cell and the data 703 of the current value obtained during stirring are matched, an increase in absorbance and a decrease in current value are detected at time t70. The abnormality is detected earlier than determined by the data 701 for forming the population in the time series, and not only the failure location but also that an abnormality has occurred in the stirring mechanism can be estimated. If an abnormality occurs in the sample dispensing mechanism or the reagent dispensing mechanism, the abnormality and location can be estimated in the same way. Although not described in the present example, the present embodiment can also be applied to the cleaning mechanism to diagnose a failure. Failure of the light source lamp may also be diagnosed by applying the method described in PTL 1.

The failure diagnosis described in the first embodiment and the second embodiment may be performed by acquiring data for failure diagnosis several times for one day, thereby performing data acquisition and diagnosis. The higher the number of failure diagnoses, the better the time resolution of abnormality detection.

According to the above embodiments of the present invention, it is possible to estimate the failure location (the location where restoration is required) when diagnosing a failure, thereby reducing the time required to recover from the failure. The probability of detecting early abnormalities can be increased, the possibility of misdiagnosis can be reduced, and analytical performance can be improved.

The present invention is not limited to the above-described embodiments, and includes various modifications. For example, the embodiments described above are those described in detail to describe the present invention in an easy-to-understand manner, and does not necessarily limit the present invention to those having all the configurations described. It is possible to replace a part of the configuration of one embodiment with the configuration of another embodiment, and it is also possible to add the configuration of one embodiment to the configuration of another embodiment. It is possible to add, delete, or replace another configuration for a part of the configuration of each embodiment.

### Reference Signs List

- 30:: control unit
- 31:: control power supply
- 32:: CPU
- 33:: memory
- 34:: storage medium
- 35:: I/O
- 36:: AD converter
- 41:: light source power supply
- 42:: light source
- 43:: multi-wavelength photometer
- 44:: power meter
- 50:: mechanism unit
- 51:: specimen container (sample container)
- 52:: reaction cell (reaction container)
- 53:: sample dispensing mechanism
- 54:: reagent dispensing mechanism
- 55:: stirring mechanism
- 56:: cleaning mechanism
- 57:: thermostat bath
- 60:: diagnosis unit
- 61:: control power supply
- 62:: CPU
- 63:: memory
- 64:: storage medium
- 66:: AD converter

## Claims

1. A chemical analysis device including a plurality of reaction cells into which specimens and reagents are dispensed, and performs absorbance measurement by a photometric system that emits light onto a mixed liquid of the specimens and the reagents contained in the reaction cell and measures the light passing through the mixed liquid, the chemical analysis device comprising:
a diagnosis unit that performs failure diagnosis, in which the diagnosis unit creates a population of photometric data for failure diagnosis for each predetermined reaction cell, and compares the photometric data of the population of photometric data created for each predetermined reaction cell with a preset threshold to perform failure diagnosis.

2. The chemical analysis device according to claim 1, wherein
the diagnosis unit accumulates time-series photometric data measured using a sample specimen for failure diagnosis and a reagent for failure diagnosis, and creates a population of photometric data for failure diagnosis for each predetermined reaction cell based on the accumulated photometric data.

3. The chemical analysis device according to claim 2, wherein
the photometric data to be compared with the threshold is the amount of difference between a measured value and an average value of the photometric data.

4. The chemical analysis device according to claim 2, wherein
the photometric data to be compared with the threshold is a coefficient of variation obtained by dividing a standard deviation of measured values of the photometric data by an average value.

5. The chemical analysis device according to claim 2, wherein
the diagnosis unit acquires time-series data of mechanisms that configure the chemical analysis device, and when a failure is determined by comparing the photometric data of the population of photometric data created for each predetermined reaction cell with the preset threshold, estimates the failure location by matching the photometric data with the time-series data of the mechanism.

6. The chemical analysis device according to claim 5, wherein
the mechanism configuring the chemical analysis device is a sample dispensing mechanism or a reagent dispensing mechanism, and the time-series data of the mechanism configuring the chemical analysis device is a pressure value in a dispensing path configuring the sample dispensing mechanism or the reagent dispensing mechanism, or a current value during pressure control of a syringe pump.

7. The chemical analysis device according to claim 5, wherein
the mechanism configuring the chemical analysis unit is a stirring mechanism that stirs the specimen and the reagent, and the time-series data of the mechanism configuring the chemical analysis device is a sound pressure value of an output ultrasound of a ultrasonic element configuring the stirring mechanism or a current value when driving the ultrasonic element.

8. The chemical analysis device according to claim 2, wherein
the diagnosis unit accumulates photometric data and determines a new threshold using the accumulated data.

9. The chemical analysis device according to claim 2, wherein
the location and the number of reaction cells used for failure diagnosis are set according to the total number of reaction cells.
